# EUROPÄISCHE PATENTSCHRIFT

(11) **EP 0 918 675 B1**
(45) Veröffentlichungstag und Bekanntmachung des Hinweises auf die Patenterteilung: **27.03.2002**
(21) Anmeldenummer: 97925840.7
(22) Anmeldetag: 07.05.1997
(51) Int. Cl.: B60T 17/02, B60T 17/18, F04B 41/02, B60T 15/50, F04B 49/06

(54) **ENERGIEVERSORGUNGSEINRICHTUNG EINER DRUCKLUFT-BREMSANLAGE, INSBESONDERE FÜR NUTZFAHRZEUGE**
ENERGY SUPPLY FOR A COMPRESSED AIR BRAKING SYSTEM, IN PARTICULAR FOR UTILITY VEHICLES
DISPOSITIF D'ALIMENTATION EN ENERGIE D'UN SYSTEME DE FREINAGE A AIR COMPRIME, EN PARTICULIER POUR VEHICULES UTILITAIRES

(30) Priorität: 14.08.1996 DE 19632754
(43) Veröffentlichungstag der Anmeldung: 02.06.1999
(73) Patentinhaber: KNORR-BREMSE Systeme für Nutzfahrzeuge GmbH, 80809 München (DE)
(72) Erfinder: DELFS, Joachim, D-71282 Hemmingen (DE); LEOPOLD, Rüdiger, D-71263 Weil der Stadt (DE); SEEGIS, Claus, D-73734 Esslingen (DE)
(86) Internationale Anmeldenummer: DE9700917
(87) Internationale Veröffentlichungsnummer: WO9806614

(56) Entgegenhaltungen:
- EP-A- 0 119 505
- US-A- 4 763 959
- SOVIET PATENT ABSTRACTS Week 9026 8.August 1990 Derwent Publications Ltd., London, GB; AN 90-199969 XP002050013 & SU 1 527 051 A (BELORUSSIAN POLY) , 7.Dezember 1989

## Beschreibung

### Stand der Technik

Die Erfindung geht aus von einer Energieversorgungseinrichtung nach der Gattung des Patentanspruchs 1.

Es ist schon eine derartige Energieversorgungseinrichtung bekannt (EP 0 689 117 A2), bei welcher das Auslaßventil (Leerlaufventil) eine federbelastete Ventilscheibe hat, die durch einen Stößel eines kolbenartigen Betätigungsmittels in die Auslaßstellung bewegbar ist, wenn die verbraucherseitige Druckhöhe den vorgewählten Abschaltdruck des elektromagnetisch schaltbaren Druckregelventils überschreitet und Steuerluft auf das Betätigungsmittel des Auslaßventils leitet, so daß dieses schlagartig öffnet. Die Schließfeder des Auslaßventils ist derart bemessen, daß das Auslaßventil auch bei einem Ausfall des Druckregelventils unabhängig vom Betätigungsmittel öffnet, also auch als Sicherheitsventil wirkt. Dabei ist jedoch der (ungesteuerte) Ansprechdruck des Auslaßventils gegenüber dem (vom Druckregelventil gesteuerten) Abschaltdruck relativ stark überhöht. Außerdem ist es unwirtschaftlich, wenn bei ausgefallenem Druckregelventil der Kompressor gegen die Schließfeder des Auslaßventils arbeitet.

### Vorteile der Erfindung

Die erfindungsgemäße Energieversorgungseinrichtung mit dem kennzeichnenden Merkmal des Patentanspruchs 1 hat demgegenüber den Vorteil, daß bei einem Ausfall des elektromagnetisch schaltbaren Druckregelventils die Regelung des Druckes mit hoher Güte erhalten bleibt und der Kompressor in der Auslaßstellung des Auslaßventils ohne wesentlichen Widerstand im Leerlauf arbeiten kann.

Durch die im Unteranspruch aufgeführte Maßnahme ist mit einfachen Mitteln eine störungsfreie Führung der Steuerluft vom jeweils in Funktion befindlichen Druckregelventil zum Auslaßventil und umgekehrt erzielt.

### Zeichnung

Ein Ausführungsbeispiel der Erfindung ist anhand eines vereinfacht dargestellten Schaltschemas einer Energieversorgungseinrichtung für Druckluft-Bremsanlagen in der nachfolgenden Beschreibung näher erläutert.

### Beschreibung des Ausführungsbeispiels

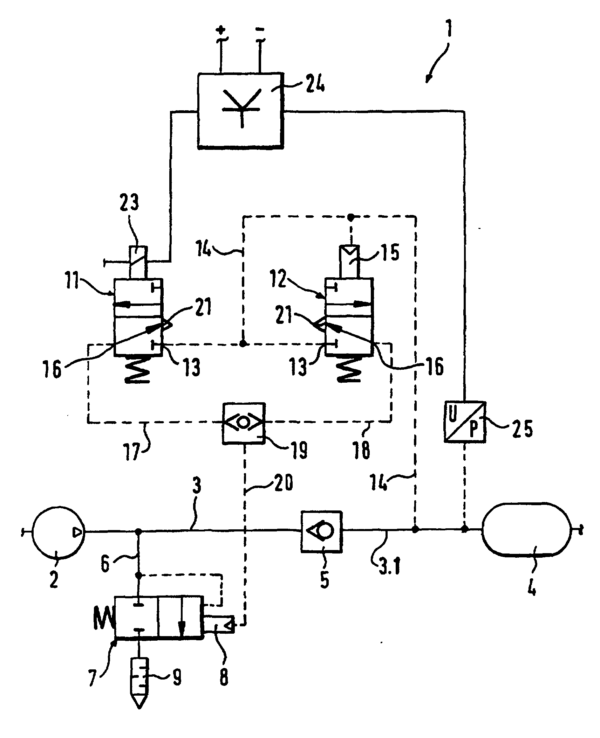

Eine in der Zeichnung dargestellte Energieversorgungseinrichtung 1 ist zur Verwendung in einer im übrigen nicht dargestellten Druckluft-Bremsanlage für Nutzfahrzeuge vorgesehen. Die Einrichtung 1 weist einen Kompressor 2 auf, von dem eine Versorgungsleitung 3 zu einem Druckluftbehälter 4 führt, an den beispielsweise ein nicht gezeichneter Betriebsbremskreis der Druckluft-Bremsanlage als Verbraucher angeschlossen ist. In der Versorgungsleitung 3 befindet sich ein Rückschlagventil 5, mit dem das Rückströmen von Druckluft aus dem Behälter 4 unterbunden wird. Zwischen dem Kompressor 2 und dem Rückschlagventil 5 ist an die Versorgungsleitung 3 ein Leitungszweig 6 angeschlossen, welcher zu einem Auslaßventil (Leerlaufventil) 7 führt. Das Auslaßventil 7 ist als 2/2-Wegeventil ausgebildet, welches federbetätigt seine Sperrstellung einnimmt. Es ist mit einem pneumatischen Betätigungsmittel 8 schlagartig in die Auslaßstellung umschaltbar. Ferner ist das Auslaßventil 7 vom Druck des Kompressors 2 in die Auslaßstellung bewegbar. Der Leitungszweig 6 ist nach dem Auslaßventil 7 zu einem Geräuschdämpfer 9 fortgeführt.

Aus Gründen der einfachen Darstellung ist im Schaltschema lediglich der Druckluftbehälter 4 eines DruckluftVerbrauchers dargestellt. Die Versorgungsleitung 3 kann jedoch nach dem Rückschlagventil 5 zu weiteren Verbrauchern der Druckluft-Bremsanlage verzweigt sein. Dabei können die weiteren Verbraucher unmittelbar oder mit einem Druckluftbehälter an die verzweigte Versorgungsleitung 3 angeschlossen sein. Bei einer derartig ausgebildeten Druckluft-Bremsanlage ist nachfolgend auf das Rückschlagventil 5 in der Versorgungsleitung 3 ein Mehrfachschutzventil oder in den Leitungszweigen der Versorgungsleitung je ein Überströmventil angeordnet. Außerdem befindet sich bei modernen Druckluft-Bremsanlagen in der Versorgungsleitung 3 zwischen dem Anschluß des Leitungszweiges 6 und dem Rückschlagventil 5 ein Lufttrockner. Für die Regenerierung dieses Lufttrockners wird dann das Rückschlagventil 5 mit Schaltmitteln umgangen.

Die Energieversorgungseinrichtung 1 weist ferner zwei Druckregelventile 11 und 12 auf, welche im Schaltschema als 3/2-Wegeventile dargestellt sind. Die beiden Druckregelventile 11 und 12 haben einen ersten Anschluß 13, der über eine verzweigte Leitung 14 mit der Versorgungsleitung 3 in Verbindung steht, und zwar mit deren zwischen dem Rückschlagventil 5 und dem Druckluftbehälter 4 verlaufenden Abschnitt 3.1. An die Leitung 14 ist auch ein pneumatisches Betätigungsmittel 15 des Druckregelventils 12 angeschlossen. Von einem zweiten Anschluß 16 der beiden Druckregelventile 11 und 12 geht jeweils eine Steuerleitung 17 und 18 aus, welche zu einem Wechselventil 19 mit Rückströmung führen. Ausgangsseitig ist das Wechselventil 19 mit einer Steuerleitung 20 an das pneumatische Betätigungsmittel 8 des Auslaßventils 7 angeschlossen. Schließlich ist zu erwähnen, daß der dritte Anschluß 21 der beiden Druckregelventile 11 und 12 zur Atmosphäre führt.

In der gezeichneten, federbetätigten Ruhestellung der beiden Druckregelventile 11 und 12 ist deren erster Anschluß 13 abgesperrt, während deren zweiter Anschluß 16 mit der Atmosphäre in Verbindung steht. Das pneumatische Betätigungsmittel 8 des Auslaßventils 7 ist daher frei von Steuerdruck, so daß das Auslaßventil 7 federbetätigt seine Sperrstellung einnimmt.

Die beiden Druckregelventile 11 und 12 sind in ihre Arbeitsstellung schaltbar, in welcher ihr erster Anschluß 13 mit dem zweiten Anschluß 16 verbunden und ihr dritter Anschluß 21 abgesperrt ist. Das Druckregelventil 12 ist, wie erwähnt, mit dem pneumatischen Betätigungsmittel 15 in die Arbeitsstellung schaltbar. Das Druckregelventil 11 besitzt dagegen ein elektromagnetisches Betätigungsmittel 23, welches von einer Steuerelektronik 24 der Energieversorgungseinrichtung 1 oder der Druckluft-Bremsanlage schaltbar ist. An die Steuerelektronik 24 ist ein Drucksensor 25 angeschlossen, der zwischen dem Rückschlagventil 5 und dem Druckluftbehälter 4 mit dem Abschnitt 3.1 der Versorgungsleitung 3 in Verbindung steht. Abweichend vom Ausführungsbeispiel kann der Drucksensor 25 am Druckluftbehälter 4 oder verbraucherseitig nach diesem an die Versorgungsleitung 3 angeschlossen sein.

Das Druckregelventil 11 ist nach Maßgabe des Druckes in die Arbeitsstellung schaltbar, den der Drucksensor 25 verbraucherseitig erfaßt. Dabei ist der Abschaltdruck des Druckregelventils 11 durch Programmieren der Steuerelektronik 24 auf einen Wert, beispielsweise 12,5 bar, vorgewählt, bei dessen verbraucherseitigem Überschreiten die Steuerelektronik das elektromagnetische Betätigungsmittel 23 des Druckregelventils 11 ansteuert. Mittels der Leitung 14 verbraucherseitig entnommene Steuerluft ist daher durch die Steuerleitung 17, das Wechselventil 19 und die Steuerleitung 20 auf das pneumatische Betätigungsmittel 8 des Auslaßventils 7 zum Schalten in die Auslaßstellung leitbar. Dabei stellt das Wechselventil 19 sicher, daß die Steuerluft nicht durch die Steuerleitung 18 zum Druckregelventil 12 abströmt. Das pneumatische Betätigungsmittel 8 schaltet das Auslaßventil 7 schlagartig in seine Auslaßstellung um, in welcher weiterhin vom Kompressor 2 geförderte Druckluft durch den Leitungszweig 6 zur Atmosphäre abströmt.

Das Druckregelventil 12 ist dagegen unmittelbar vom verbraucherseitigen Druck schaltbar. Es ist auf einen Abschaltdruck eingestellt, der geringfügig höher liegt als der Abschaltdruck des Druckregelventils 11, beispielsweise ist das Druckregelventil 12 auf einen Abschaltdruck von 12,8 bar einjustiert. Fallen die Steuerelektronik 24 oder das Druckregelventil 11 aus, so übernimmt das Druckregelventil 12 die Druckregelung der Energieversorgungseinrichtung 1. Überschreitet der verbraucherseitige Druck den Wert von 12,8 bar, so schaltet das Druckregelventil 12 in die Arbeitsstellung und Steuerluft wird durch die Steuerleitung 18, das Wechselventil 19 und die Steuerleitung 20 zum Auslaßventil 7 geführt. Die Funktion der Energieversorgungseinrichtung 1 bleibt daher bei einem geringfügig erhöhten Verbraucherdruck erhalten.

## Patentansprüche

1. Energieversorgungseinrichtung (1) einer Druckluft-Bremsanalge, insbesondere für Nutzfahrzeuge,
- mit einem Kompressor (2) zur Versorgung wenigstens eines Druckluftverbrauchers durch eine Versorgungsleitung (3) mit einem in dieser angeordneten Rückschlagventil (5),
- mit einem pneumatisch schaltbaren Auslaßventil (7), welches zwischen dem Kompressor (2) und dem Rückschlagventil (5) an die Versorgungsleitung (3) angeschlossen ist,
- mit einem elektromagnetisch schaltbaren Druckregelventil (11), mit dem verbraucherseitig entnommene Steuerluft durch eine Steuerleitung (17, 20) auf das Auslaßventil (7) zum Schalten in die Auslaßstellung leitbar ist,
- mit einem den verbraucherseitigen Druck erfassenden Drucksensor (25) und
- mit einer Steuerelektronik (24), welche das Druckregelventil (11) nach dem erfassten Druck steuert, **gekennzeichnet durch** das weitere Merkmal:
- mit einem vom verbraucherseitigen Druck unmittelbar schaltbaren zweiten Druckregelventil (12), mit dem verbraucherseitig entnommene Steuerluft **durch** eine Steuerleitung (18, 20) auf das Auslaßventil (7) zum Schalten in die Auslaßstellung leitbar ist, wobei das zweite Druckregelventil (12) bei einem gegenüber dem Schaltdruck (Abschaltdruck) des elektromagnetisch schaltbaren ersten Druckregelventils (11) höheren verbraucherseitigen Druck schaltet.

2. Energieversorgungseinrichtung nach Anspruch 1, **dadurch gekennzeichnet, daß** das zweite Druckregelventil (12) ebenso wie das erste Druckregelventil als 3/2-Wegeventil ausgebildet ist, und daß die Steuerleitungen (17, 18) des ersten und des zweiten Druckregelventils (11, 12) auf ein Wechselventil (19) geführt sind, an das ausgangsseitig das Auslaßventil (7) mit seinem Betätigungsmittel (8) angeschlossen ist.

## Claims

1. Energy supply system (1) for a compressed-air braking system, in particular for utility vehicles, comprising
- a compressor (2) for supplying at least one unit of equipment operating on compressed air through a supply line (3) including a non-return valve (5) disposed therein,
- a pneumatically switchable outlet valve (5) that is connected to said supply line between said compressor (2) and said non-return valve (5),
- an electromagnetically switchable pressure governor valve (11) that serves to pass control air, which is tapped on the equipment side, through a control line (17, 20) to said outlet valve (7) for switching into the outlet position,
- a pressure sensor (25) detecting the pressure on the equipment side, and an electronic control system (24) that controls said pressure governor valve (11) in correspondence with the detected pressure,
**characterised by** the further feature:
- comprising a second pressure governor valve (12) adapted to pass control air, which is tapped on the equipment side, through a control line (18, 20) to said outlet valve (7) for switching into the outlet position, with said second pressure governor valve (12) switching in response to a pressure on the equipment side, which is higher than the switching pressure (cut-off pressure) of said electromagnetically switchable first pressure governor valve (11).

2. Energy supply system according to Claim 1, **characterised in that** said second pressure governor valve (12) has the configuration of a 3/2-way valve, equal to the configuration of said first pressure governor valve, and that said control lines (17, 18) of first and second pressure governor valves (11, 12) are passed to a shuttle valve (19 to the output side of which said outlet valve (7) with its actuator means (8) is connected.

## Revendications

1. Dispositif (1) d'alimentation en énergie d'un système de freinage à air comprimé, notamment pour véhicules utilitaires,
- comprenant un compresseur (2) d'alimentation d'au moins un utilisateur d'air comprimé par un conduit (3) d'alimentation ayant un clapet (5) anti-retour monté dans celui-ci,
- comprenant une vanne (7) de sortie pouvant être commutée pneumatiquement et raccordée entre le compresseur (2) et le clapet (5) anti-retour sur le conduit (3) d'alimentation,
- comprenant une vanne (11) de régulation de la pression pouvant être commutée électromagnétiquement, par laquelle de l'air de commande prélevé du côté de l'utilisateur peut être envoyé par un conduit (17, 20) de commande à la vanne (7) de sortie pour la mettre dans la position de sortie,
- comprenant un capteur (25) de pression relevant la pression du côté de l'utilisateur,
- comprenant une électronique (24) de commande qui commande la vanne (11) de régulation de la pression suivant la pression relevée,
**caractérisé par** la caractéristique supplémentaire :
- comprenant une deuxième vanne (12) de régulation de la pression pouvant être commutée directement par la pression du côté de l'utilisateur et par laquelle de l'air de commande prélevé du côté de l'utilisateur peut être envoyé par un conduit (18, 20) de commande à la vanne (7) de sortie pour la mettre dans la position de sortie, la deuxième vanne (12) de régulation de la pression commutant pour une pression du côté de l'utilisateur plus grande que la pression de commutation (pression de déconnexion) de la première vanne (11) de régulation de la pression pouvant être commutée électromagnétiquement.

2. Dispositif d'alimentation en énergie suivant la revendication 1, **caractérisé en ce que** la deuxième vanne (12) de régulation de la pression est constituée tout comme la première vanne de régulation de la pression en vanne à 3/2 voies et **en ce que** les conduits (17, 18) de commande de la première et de la deuxième vanne (11, 12) de régulation de la pression vont à une vanne (19) à deux voies à laquelle la vanne (7) de sortie est raccordée du côté de la sortie par son moyen (8) d'actionnement.
